(19) Europäisches Patentamt
European Patent Office
Office européen des brevets

(11) **EP 1 750 268 A2**

(12) **EUROPÄISCHE PATENTANMELDUNG**

(43) Veröffentlichungstag:
07.02.2007 Patentblatt 2007/06

(51) Int Cl.:
*G11B 27/10* (2006.01)    *H04N 7/24* (2006.01)

(21) Anmeldenummer: 06117776.2

(22) Anmeldetag: **25.07.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **02.08.2005  DE 102005036286**

(71) Anmelder: **SIEMENS AKTIENGESELLSCHAFT**
**80333 München (DE)**

(72) Erfinder:
• **Göhring, Thomas**
**36469 Tiefenort (DE)**
• **Weymann, Bernd**
**35619 Braunfels (DE)**

(54) **Verfahren zur Bestimmung der Wiedergabezeit komprimierter Audiodaten**

(57)    Es wird ein Verfahren zur Bestimmung der Wiedergabezeit einer Audiodatei mit komprimierten Audiodaten vorgeschlagen, wobei an mehreren Stellen der Audiodatei Stichproben der komprimierten Audiodaten genommen werden, die komprimierten Audiodaten der Stichproben dekomprimiert werden, anhand der dekomprimierten Audiodaten der Stichproben Wiedergabezeiten für die Stichproben ermittelt werden und aus den ermittelten Wiedergabezeiten der Stichproben die Wiedergabezeit der Audiodatei ermittelt wird.

FIG 1

```
┌─────────────────────────┐
│  Stichprobenumfang       │── S1
│  festlegen               │
└─────────────────────────┘
            │
            ▼
┌─────────────────────────┐
│  Stichprobe              │── S2
│  nehmen                  │
└─────────────────────────┘
            │
            ▼
┌─────────────────────────┐
│  Daten der Stichprobe    │── S3
│  dekomprimieren          │
└─────────────────────────┘
            │
            ▼
┌─────────────────────────┐
│  Wiedergabezeit der      │── S4
│  Stichprobe ermitteln    │
└─────────────────────────┘
            │
            ▼
┌─────────────────────────┐
│  Wiedergabezeit der      │── S5
│  Stichprobe speichern    │
└─────────────────────────┘
            │
            ▼
          ◇ alle
   nein   Stichproben   S6
          genommen?
            │ ja
            ▼
┌─────────────────────────┐
│  Wiedergabezeit der      │── S7
│  Audiodatei ermitteln    │
└─────────────────────────┘
```

EP 1 750 268 A2

**Beschreibung**

Die Erfindung betrifft ein Verfahren zur Bestimmung der Wiedergabezeit einer Audiodatei mit komprimierten Audiodaten. Weiterhin betrifft die Erfindung ein Audioabspielgerät mit einem Speichermedium, Mitteln zur Dekomprimierung von komprimiert auf dem Speichermedium abgespeicherten Audiodaten einer Audiodatei sowie Mitteln zur Bestimmung einer Wiedergabezeit der Audiodatei.

Audiodaten werden heutzutage zumeist digital abgespeichert. Geschieht dies ohne eine Komprimierung der Daten, so ist der Speicherplatzbedarf entsprechend hoch. Es wurden daher in der Vergangenheit Kompressionsverfahren entwickelt, um den Speicherplatzbedarf zu verkleinern. Das am weitesten verbreitete Kompressionsverfahren ist derzeit MP3, oder genauer: MPEG Audio Layer III. MP3-Audiodateien sind um etwa dem Faktor 12 kleiner als entsprechende unkomprimierte Dateien. Insbesondere für portable Geräte oder auch Audiogeräte für Kraftfahrzeuge werden entsprechend komprimierte Audiodateien verwendet.

Bei Musiktiteln sind viele Töne durch andere Töne überlagert, andere Töne werden vom Gehör gar nicht wahrgenommen, da sie außerhalb des hörbaren Frequenzbereiches liegen. Bei MP3 werden solche unhörbaren Audioinformationen einfach entfernt. Die Dateigröße der komprimierten Audiodatei ist daher insbesondere abhängig vom Anteil dieser durch das Komprimierungsverfahren entfernten Audioinformationen.

Bei einem Komprimierungsverfahren, das - wie MP3 - eine variable Codierung vorsieht, ist es somit nicht mehr möglich, die exakte Wiedergabedauer (Spieldauer) eines Titels aus den komprimierten Daten schnell zu ermitteln. Um die exakte Wiedergabedauer eines Titels zu ermitteln, muss die komprimierte Audiodatei zunächst komplett decodiert werden. Diese komplette Decodierung der komprimierten Audiodatei nimmt jedoch eine gewisse Zeit in Anspruch und wird daher in der Regel nicht ausgeführt.

Im Handel erhältliche MP3-Abspielgeräte geben eine Wiedergabezeit aus, die häufig um ein Mehrfaches von der tatsächlichen Wiedergabezeit abweicht.

Aufgabe der Erfindung ist es daher, ein Verfahren zur Bestimmung der Wiedergabezeit einer Audiodatei mit komprimierten Audiodaten bzw. ein Audio-Abspielgerät anzugeben, das eine schnelle und dennoch genaue Bestimmung der Wiedergabezeit erlaubt.

Die Aufgabe wird durch ein Verfahren bzw. ein Audio-Abspielgerät mit den Merkmalen des jeweiligen unabhängigen Anspruchs gelöst.

Das erfindungsgemäße Verfahren beruht auf einer statistischen Stichprobenanalyse. Hierzu werden zunächst an mehreren Stellen der Audiodatei Stichproben der komprimierten Audiodaten genommen. Anschließend werden die komprimierten Audiodaten dieser Stichproben dekomprimiert (decodiert). Anhand der dekomprimierten Audiodaten wird dann die Wiedergabezeit für jede der Stichproben ermittelt. Aus den ermittelten Wiedergabezeiten für die einzelnen Stichproben wird schließlich in einem letzten Schritt die Wiedergabezeit für die gesamte Audiodatei ermittelt. Bei dem erfindungsgemäßen Verfahren werden somit nur die Audiodaten der Stichproben dekomprimiert. Die Dekomprimierungszeit ist somit wesentlich kleiner als bei einer vollständigen Dekomprimierung der gesamten Audiodatei. Da die Stichproben an mehreren Stellen der Audiodatei genommen werden, können somit unterschiedliche Komprimierungsgrade an verschiedenen Stellen der Audiodatei durch eine statistische Auswertung berücksichtigt werden. Hierdurch wird eine hohe Genauigkeit der berechneten Wiedergabezeit erzielt.

In vielen Fällen beginnt ein Musiktitel leise. Dadurch können die Audiodaten zu Beginn des Musikstückes hoch komprimiert werden. Entsprechendes gilt auch häufig für das Ende eines Musiktitels. Da diese Anfangs- und Endphasen eines Musiktitels jedoch nur einen geringen Teil des gesamten Musiktitels ausmachen, kann insbesondere vorgesehen sein, dass die Stichproben außerhalb eines Anfangs- und/oder eines Endbereiches der Audiodaten genommen werden.

Werden Anzahl und Umfang der Stichproben in Abhängigkeit der Dateigröße festgelegt, so wird auch bei sehr kurzen oder sehr langen Musiktiteln die Wiedergabezeit zuverlässig bestimmt.

Enthält jede der Stichproben nicht mehr als 100 KB komprimierter Audiodaten, so kann die Dekomprimierung der Stichproben sehr schnell durchgeführt werden und somit die Gesamtdauer zur Bestimmung der Wiedergabezeit sehr klein gehalten werden. Gleiches gilt für den Fall, dass die Anzahl der Stichproben begrenzt wird, insbesondere auf nicht mehr als zehn Stichproben pro 1 MB komprimierter Audiodaten.

Zur Bestimmung der Wiedergabezeit kann insbesondere zunächst eine mittlere Wiedergabezeit der Stichproben und ein mittlerer Datenumfang der Stichproben ermittelt werden. Aus der so ermittelten Wiedergabezeit und dem mittleren Datenumfang der Stichproben kann dann zusammen mit dem Datenumfang der gesamten komprimierten Audiodaten die Bestimmung der Wiedergabezeit durchgeführt werden. Hierzu wird der gesamte Datenumfang der komprimierten Audiodaten durch den mittleren Datenumfang der Stichproben dividiert und das Ergebnis mit der mittleren Wiedergabezeit der Stichproben multipliziert. Durch einfache Rechenoperationen kann somit schnell die Wiedergabezeit bestimmt werden.

Enthält die Audiodatei Metadaten, und bleiben diese Metadaten bei der Bestimmung der Wiedergabezeit unberücksichtigt, so wird eine Verfälschung der berechneten Wiedergabezeit durch die Metadaten der Audiodatei vermieden. Als Metadaten werden allgemein Daten bezeichnet, die Informationen über andere Daten enthalten. Bei Audiodateien enthalten die Metadaten beispielsweise den Namen des Interpreten und des Musiktitels. Die Metadaten sind häufig am Anfang und/oder am Ende der Audiodatei angeordnet, können sich jedoch auch weit verstreut innerhalb des Datenstromes befinden. Dadurch, dass die Wiedergabezeit der dekomprimierten Stichproben ermittelt wird, machen sich Metadaten auch dann nicht negativ bemerkbar, wenn sie in der Stichprobe selbst enthalten sind. Es ist also nicht erforderlich, die Metadaten aus dem Datenstrom separat herauszufiltern.

Das Verfahren kann insbesondere zur Bestimmung der Wiedergabezeit von solchen Audiodateien benutzt werden, bei denen die Metadaten der Audiodatei nicht selbst eine Information über die Wiedergabezeit enthalten. Dies ist insbesondere bei Audiodaten im MP3-Format der Fall.

Ein Audio-Abspielgerät mit einem Speichermedium, Mitteln zur Dekomprimierung von komprimiert auf dem Speichermedium abgespeicherten Audiodaten einer Audiodatei sowie Mitteln zur Bestimmung einer Wiedergabezeit der Audiodatei ist erfindungsgemäß dadurch gekennzeichnet, dass das Audio-Abspielgerät weiterhin Mittel zur Entnahme von Stichproben aus den komprimierten Audiodaten und zur Bestimmung der Wiedergabezeit aus den Stichproben aufweist. Hierzu kann insbesondere das zuvor beschriebene Verfahren eingesetzt werden.

Die Erfindung wird nachfolgend anhand eines Ausführungsbeispiels und der Zeichnung näher erläutert. Es zeigen:

Figur 1     ein Ablaufdiagramm eines erfindungsgemäßen Verfahrens,

Figur 2     die schematische Darstellung einer Audiodatei als Datensequenz,

Figur 3     die wesentlichen Komponenten eines Audio-Abspielgerätes zur Durchführung des erfindungsgemäßen Verfahrens.

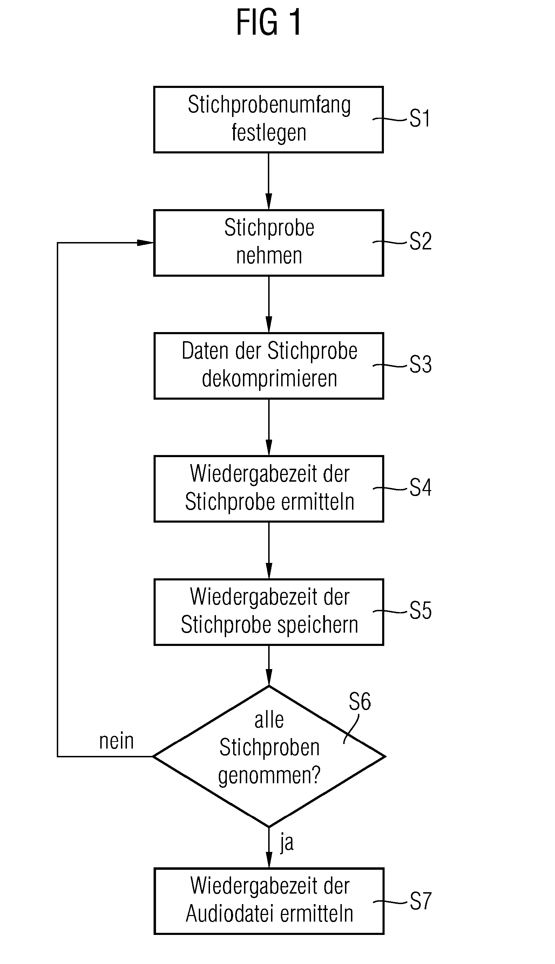

Figur 1 zeigt ein Ablaufdiagramm eines erfindungsgemäßen Verfahrens. In Schritt S1 wird zunächst der Stichprobenumfang festgelegt. Die Festlegung des Stichprobenumfanges kann insbesondere anhand der Größe der komprimierten Audiodatei erfolgen. Beispielsweise wird pro 1 MB komprimierter Daten eine Stichprobe festgelegt. Die Blockgröße einer Stichprobe wird mit 8 kB einheitlich für alle Stichproben festgelegt. Grundsätzlich kann jedoch sowohl die Anzahl n der Stichproben als auch die Blockgröße $y(x)$ der einzelnen Stichproben frei gewählt werden.

In Schritt S2 wird nun die erste Stichprobe genommen, hier also eine Partition der Größe 8 kB aus den ersten 1 MB komprimierter Audiodaten der Audiodatei. In Schritt S3 wird die Partition dann dekomprimiert und in Schritt S4 die Wiedergabezeit der Partition ermittelt. Die Wiedergabezeit der Partition wird dabei direkt aus der Länge der dekomprimierten Audiodaten ermittelt.

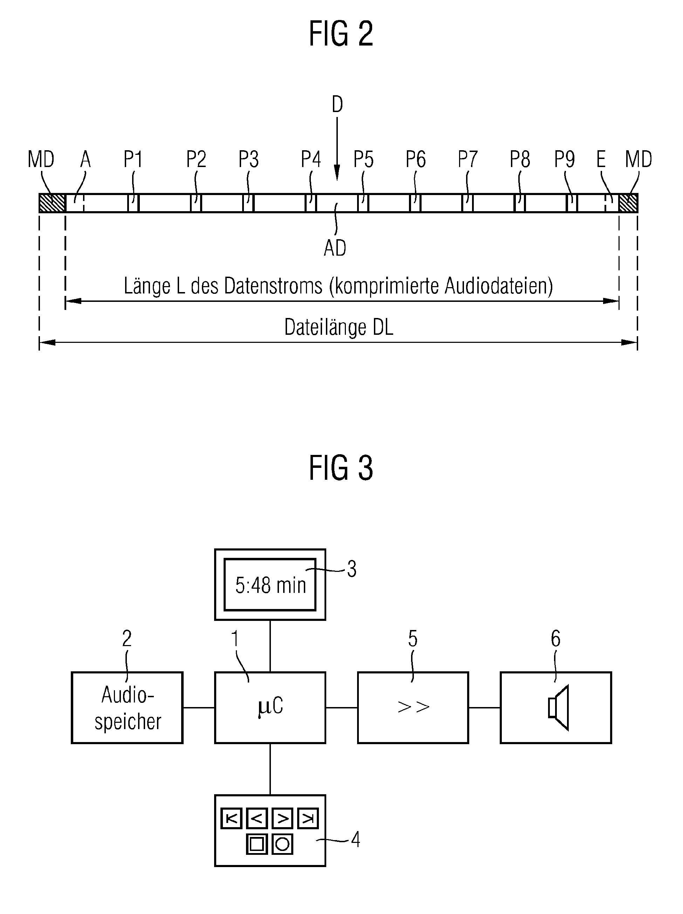

In Schritt S5 wird die ermittelte Wiedergabezeit der Partition in einem Speicher für die spätere Auswertung abgelegt. In Schritt S6 wird geprüft, ob bereits alle Stichproben genommen worden sind. Ist dies, wie hier nach der ersten Stichprobe, nicht der Fall, so wird das Verfahren mit Schritt S2 fortgeführt und die nächste Stichprobe genommen. Die Schleife mit den Schritten S2, S3, S4, S5 und S6 wird somit durchlaufen bis alle Stichproben genommen sind. Wird dies in Schritt S6 detektiert, so wird in Schritt S7 die Wiedergabezeit ermittelt. Dies wird anhand der Figur 2 näher erläutert.

Figur 2 zeigt schematisch eine komprimierte Datei D als Datensequenz. Die Datei D enthält bei dieser Darstellung an einem Dateianfang und einem Dateiende Metadaten MD sowie weiterhin die komprimierten Audiodaten AD. Der Datenstrom mit den Audiodaten AD wird partitioniert, wobei die Partitionen P1 bis P9 als Stichproben genommen werden. Die Partitionen P1 bis P9 weisen eine einheitliche Größe von 8 kB auf, wobei in zwei Ausführungsvarianten eine Partition oder vier Partitionen pro 1 MB Audiodaten verwendet werden. Da lediglich die komprimierten Audiodaten der Partitionen P1 bis P9 dekomprimiert werden und nicht der komplette Audiodatenstrom, werden im Ausführungsbeispiel somit pro 1 MB komprimierter Audiodaten lediglich 8 kB bzw. 4 x 8 kB = 32 kB dekomprimiert, so dass dieser Vorgang entsprechend schnell durchgeführt werden kann. Für jede der Partitionen P1 bis P9 wird nun anhand der dekomprimierten Audiodaten die Wiedergabezeit $t(x)$ bestimmt. Anschließend wird die statistische Wiedergabezeit St als arithmetisches Mittel der Wiedergabezeiten der Partitionen P1 bis P9 gemäß

$$St = (\Sigma\, t(x))/n$$

für x = 1 bis n

bestimmt, wobei n die Anzahl der Partitionen, hier n = 9, ist. In entsprechender Weise wird die statistische Länge SL der Partitionen P1 bis P9 bestimmt. Im Ausführungsbeispiel sind die Partitionen P1 bis P9 gleich lang und umfassen jeweils 8 kB.

Die Wiedergabezeit der Audiodaten kann anschließend aus der Länge L des Datenstromes, das heißt dem Umfang der komprimierten Audiodaten, der statistischen Länge SL der Partitionen P1 bis P9 und der statistischen Wiedergabezeit St der Partitionen P1 bis P9 ermittelt werden gemäß

$$W = (L/SL) \cdot St$$

Die Partitionen P1 bis P9 werden vorzugsweise so innerhalb der partitionierten Datei ausgewählt, dass sie außerhalb eines Anfangsbereiches A und eines Endbereiches E der Datei liegen. Der Grund hierfür liegt im Wesentlichen darin, dass bei Musiktiteln häufig der Beginn, der im Anfangsbereich A liegt, und das Ende, dass im Endbereich E liegt, sehr leise sind und somit insbesondere bei einer nur geringen Anzahl von ausgewählten Partitionen eine erhöhte Abweichung von der tatsächlichen Wiedergabezeit auftreten kann.

Im Beispiel gemäß Figur 2 sind die Metadaten MD zu Anfang und Ende der Datei angeordnet. In anderen Fällen sind die Metadaten über die gesamte Datei verstreut und können daher insbesondere auch Teil einer Partition sein. Da die Metadaten aber nicht zur Wiedergabezeit beitragen, wird dies bei der Bestimmung der Wiedergabezeiten für die jeweiligen Partitionen berücksichtigt, so dass sich das Auftreten von Metadaten innerhalb der Partitionen nicht negativ bemerkbar macht.

In der Tabelle sind für verschiedene Audiodateien, die als MP3-Dateien vorliegen, die mit erfindungsgemäßen Verfahren und Vergleichsverfahren bestimmte Wiedergabezeit und die dafür benötigte Analysezeit angegeben.

Bei den Verfahren "Erf1P/MB" und "Erf4P/MB" handelt es sich um erfindungsgemäße Verfahren, bei denen pro 1 MB komprimierter Audiodaten eine Partition bzw. 4 Partitionen mit einer Blockgröße von 8 kB als Stichproben genommen wurden.

Bei den Verfahren "A512" und "A8kB" handelt es sich um nicht erfindungsgemäße Vergleichsverfahren, bei denen die ersten 512 Byte bzw. die ersten 8kB der komprimierten Audiodaten dekomprimiert werden und aus deren Wiedergabezeit die Wiedergabezeit der gesamten Audiodaten bestimmt wird. Hierbei wird also nur eine einzige Stichprobe genommen und folglich auch keine statistische Analyse durchgeführt.

Bei dem nicht erfindungsgemäßen Verfahren "C" wird die gesamte Audiodatei dekomprimiert und die Wiedergabezeit bestimmt.

Ein Vergleich der Daten zeigt, dass mit den erfindungsgemäßen Verfahren "Erf1P/MB" und "Erf4P/MB" Wiedergabezeiten ermittelt werden, die weitgehend mit den mit vollständiger Dekomprimierung ermittelten Werten (Verfahren "C") übereinstimmen, wobei die Analysezeit jedoch deutlich kleiner ist. Während mit Verfahren "C" Analysezeiten im Sekundenbereich benötigt werden, die von einem Benutzer kaum akzeptiert werden, liegen die Analysezeiten bei dem erfindungsgemäßen Verfahren "Erf1P/MB" nur bei wenigen 100 Millisekunden.

Die Vergleichsverfahren "A512" und "A8kB" benötigt zwar eine noch geringere Analysezeit, jedoch sind die ermittelten Wiedergabezeiten deutlich, bei "A512" um ein Mehrfaches von der tatsächlichen Wiedergabezeit entfernt. Diese Verfahren liefern somit kaum brauchbare Informationen.

Figur 3 zeigt die wesentlichen Komponenten eines Audio-Abspielgerätes, in dem das Verfahren eingesetzt werden kann. Zentraler Bestandteil des Abspielgerätes ist eine Recheneinheit 1. Mit der Recheneinheit 1 ist ein Audio-Speicher 2 verbunden, auf dem die Audiodateien mit den komprimierten Audiodaten abgespeichert sind. Bei dem Audio-Speicher kann es sich um eine CD, eine DVD, eine Festplatte oder eine Speicherkarte oder dergleichen handeln. Mit der Recheneinheit 1 sind weiterhin eine Anzeigeeinheit 3 sowie eine Bedieneinheit 4 verbunden. Weiterhin ist mit der Recheneinheit 1 ein Audioverstärker 5 verbunden, über den die von der Recheneinheit bereitgestellten Audiodaten an eine akustische Ausgabeeinheit 6 weitergeleitet werden. Das erfindungsgemäße Verfahren zur Bestimmung der Wiedergabezeit läuft als Computerprogramm auf der Recheneinheit 1 ab. Das Programm steuert die Recheneinheit 1 zur Entnahme von Stichproben aus den komprimierten Audiodaten und zur Bestimmung der Wiedergabezeit aus den Stichproben.

Tabelle

| Audio-Datei | Verfahren | Analysezeit (ms) | Berechnete Wiedergabezeit (min) |
|---|---|---|---|
| FUSION.mp3 | A512 | 130 | 18:14 |
| | Erf1P/MB | 261 | 3:30 |
| | Erf4P/MB | 731 | 3:27 |
| | C | 3024 | 3:29 |

(fortgesetzt)

| Audio-Datei | Verfahren | Analysezeit (ms) | Berechnete Wiedergabezeit (min) |
|---|---|---|---|
| WHOSE SIDE ARE YOU ON.mp3 | A512 | 30 | 26:22 |
| | Erf1P/MB | 230 | 4:33 |
| | Erf4P/MB | 851 | 4:34 |
| | C | 3675 | 4:35 |
| DISCOPHON.mp3 | A512 | 30 | 14:29 |
| | Erf1P/MB | 311 | 7:00 |
| | Erf4P/MB | 1372 | 7:02 |
| | C | 4967 | 7:12 |
| I WANT YOU.mp3 | A512 | 30 | 26:38 |
| | A8kB | 40 | 7:41 |
| | Erf1P/MB | 291 | 4:33 |
| | Erf4P/MB | 871 | 4:35 |
| | C | 3575 | 4:38 |
| ORGANIC MONDAY.mp3 | A512 | 30 | 35:46 |
| | A8kB | 40 | 15:03 |
| | Erf1P/MB | 310 | 6:20 |
| | C | 4736 | 6:32 |

**Patentansprüche**

1. Verfahren zur Bestimmung der Wiedergabezeit einer Audiodatei mit komprimierten Audiodaten, wobei an mehreren Stellen der Audiodatei Stichproben der komprimierten Audiodaten genommen werden, die komprimierten Audiodaten der Stichproben dekomprimiert werden, anhand der dekomprimierten Audiodaten der Stichproben Wiedergabezeiten für die Stichproben ermittelt werden und aus den ermittelten Wiedergabezeiten der Stichproben die Wiedergabezeit der Audiodatei ermittelt wird.

2. Verfahren nach Anspruch 1, **dadurch gekennzeichnet, dass** die Stichproben außerhalb eines Anfangs- und/oder eines Endbereichs der Audiodaten genommen werden.

3. Verfahren nach einem der vorhergehenden Ansprüche, **dadurch gekennzeichnet, dass** Anzahl und Umfang der Stichproben in Abhängigkeit von der Dateigröße festgelegt wird.

4. Verfahren nach einem der vorhergehenden Ansprüche, **dadurch gekennzeichnet, dass** jede der Stichproben weniger als 100 kB, insbesondere weniger als 50kB komprimierter Audiodaten enthält.

5. Verfahren nach einem der vorhergehenden Ansprüche, **dadurch gekennzeichnet, dass** pro 1 MB komprimierter Audiodaten nicht mehr als 10 Stichproben, insbesondere nicht mehr als 5 Stichproben genommen werden.

6. Verfahren nach einem der vorhergehenden Ansprüche, **dadurch gekennzeichnet, dass** eine mittlere Wiedergabezeit der Stichproben und eine mittlerer Datenumfang der Stichproben ermittelt und zusammen mit dem Datenumfang der komprimierten Audiodaten zur Bestimmung der Wiedergabezeit der Audiodatei herangezogen werden.

7. Verfahren nach Anspruch 1, **dadurch gekennzeichnet, dass** die Audiodatei Metadaten enthält und die Metadaten bei der Bestimmung der Wiedergabezeit unberücksichtigt bleiben.

8. Verfahren nach einem der vorhergehenden Ansprüche, **dadurch gekennzeichnet, dass** es sich bei den komprimierten Audiodaten um Audiodaten im MP3-Format handelt.

9. Audio-Abspielgerät mit Mitteln zur Dekomprimierung von komprimiert auf einem Speichermedium (2) abgespeicherten Audiodaten einer Audiodatei sowie Mitteln zur Bestimmung einer Wiedergabezeit der Audiodatei, **dadurch gekennzeichnet, dass** das Audio-Abspielgerät weiterhin Mittel zur Entnahme von Stichproben aus den komprimierten Audiodaten und zur Bestimmung der Wiedergabezeit aus den Stichproben aufweist.

**10.** Audio-Abspielgerät nach Anspruch 9, **dadurch gekennzeichnet, dass** das Audio-Abspielgerät Mittel zur Bestimmung eines Stichprobenumfangs aufweist.

# FIG 1

```
┌─────────────────────────┐
│   Stichprobenumfang      │──── S1
│      festlegen           │
└─────────────────────────┘
            │
            ▼
┌─────────────────────────┐
│     Stichprobe           │──── S2
│      nehmen              │
└─────────────────────────┘
            │
            ▼
┌─────────────────────────┐
│  Daten der Stichprobe    │──── S3
│    dekomprimieren        │
└─────────────────────────┘
            │
            ▼
┌─────────────────────────┐
│  Wiedergabezeit der      │──── S4
│   Stichprobe ermitteln   │
└─────────────────────────┘
            │
            ▼
┌─────────────────────────┐
│  Wiedergabezeit der      │──── S5
│   Stichprobe speichern   │
└─────────────────────────┘
            │
            ▼
          ◇ S6
   alle
   Stichproben
   genommen?
   nein ◇ ja
            │
            ▼
┌─────────────────────────┐
│  Wiedergabezeit der      │──── S7
│   Audiodatei ermitteln   │
└─────────────────────────┘
```

# FIG 2

D

MD  A   P1    P2    P3    P4    P5    P6    P7    P8    P9    E   MD

AD

Länge L des Datenstroms (komprimierte Audiodateien)

Dateilänge DL

# FIG 3

5:48 min    — 3

2            1                    5              6

| Audio-<br>speicher | µC | >> | ⊲ |

⊲ ⊲ ⊳ ⊳
▢ ◯    — 4